# EUROPEAN PATENT APPLICATION

(11) **EP 4 000 971 A1**
(43) Date of publication of application: **25.05.2022**
(21) Application number: 20209424.9
(22) Date of filing: 24.11.2020
(51) Int. Cl.: B60G 11/04, B60G 17/019, B60G 11/46, B60T 8/00, B60G 17/0185, B60G 17/052, B60T 8/172, B60T 8/171

(54) **METHOD AND CONTROL UNIT FOR CONTOLLING A CHASSIS SYSTEM IN A VEHICLE COMPRISING A LEAF SPRING**

(71) Applicant: VOLVO TRUCK CORPORATION, 405 08 Göteborg (SE)
(72) Inventor: OLSSON, Anders, 417 20 Göteborg (SE); PREIJERT, Stefan, 415 07 Göteborg (SE)
(74) Representative: Valea AB

(57) **Abstract**

The present invention relates to a control unit (100) for controlling a chassis system (1) between at least a ground contact point (P) and a frame of a vehicle (200), the chassis system (1) comprising a leaf spring (10) and a chassis arrangement (20), said chassis arrangement (20) is adapted to receive a chassis condition input signal and to control a chassis condition of said chassis arrangement (20) in response to said chassis condition input signal, said chassis system (1) further comprising a strain gauge (14) adapted to issue a strain gauge output signal indicative of a strain in said leaf spring (10), wherein said control unit (100) is adapted to receive said strain gauge output signal and to issue said chassis condition input signal to said chassis arrangement (20) on the basis of said strain gauge output signal. The invention also relates to a method, a chassis system, and a vehicle.

## Description

### TECHNICAL FIELD

The invention relates to a control unit and method for controlling a chassis system between at least a ground contact point and a frame of a vehicle, the chassis system comprising a leaf spring and a chassis arrangement. The invention also relates to a chassis system and to a vehicle implementing the invention.

The invention can be applied in heavy-duty vehicles, such as trucks, buses and construction equipment. Although the invention will be described with respect to a truck, the invention is not restricted to this particular vehicle, but may also be used in other vehicles such as buses or working machines.

### BACKGROUND

There are numerous reasons for desiring to control a chassis system, such as a suspension system or a brake system, of a vehicle. For example, different operating conditions of the vehicle, such as the loading condition, inclination condition, or the status of the road travelled by the vehicle, might require different operating conditions of the chassis system. As such, there is a need for controlling a chassis system in an appropriate manner.

### SUMMARY

An object of the invention is to provide a control unit and method for controlling a chassis system of a vehicle, which method may be used to realize a variety of control options.

The term "chassis" as used herein means a frame plus the running equipment of a vehicle, including for example the suspension and brakes. Consequently, a "chassis system" relates to a system that is located between at least one ground contact point and a frame of a vehicle and may consequently comprise e.g. a suspension system or a brake system.

The ground contact point may conventionally be the contact point to the ground of a wheel, or any other ground engaging member, of the vehicle.

The chassis system comprises a leaf spring, as is per se conventional in the art. When subject to load, the leaf spring will flex in proportion to the load. Strains through the leaf spring may be measured using a leaf spring strain sensor such as a leaf spring strain gauge. The strain gauge is to be arranged so as to provide a strain gauge output signal indicative of the measured strain in the leaf spring.

For example, a strain gauge may be attached to the exterior the leaf spring to measure the strain in the leaf spring.

Alternatively, the leaf spring may be embedded in the leaf spring, for example in a composite leaf spring (see e.g. GB 2546466). This may be preferred for accuracy as well as for enabling a simple construction.

It will be understood that one or more strain gauge elements may be arranged to provide a strain gauge output signal indicative of the measured strain in the same leaf spring.

The chassis system described herein further comprises a chassis arrangement. The chassis arrangement is adapted to assume a chassis condition which controls an operating condition of the chassis system depending on a chassis condition input signal.

For example, if the chassis arrangement is a suspension system, the chassis arrangement may comprise an air bellows, wherein the pressure condition of the air bellows controls an operating condition of the chassis system.

In another example, if the chassis arrangement is a brake system, the chassis arrangement may comprise a pneumatic brake, wherein the pressure condition of the pneumatic brake controls an operating condition of the chassis system.

The invention relates in a first aspect to a control unit for controlling a chassis system between at least a ground contact point and a frame of a vehicle, the chassis system comprising a leaf spring and a chassis arrangement. The chassis arrangement is adapted to receive a chassis condition input signal and to control a chassis condition of the chassis arrangement in response to the chassis condition input signal. The chassis system further comprises a strain gauge adapted to issue a strain gauge output signal indicative of a strain in the leaf spring, wherein the control unit is adapted to receive the strain gauge output signal and to issue the chassis condition input signal to the chassis arrangement on the basis of the strain gauge output signal.

In accordance with the first aspect of the invention, the control unit is adapted to receive the strain gauge output signal and to issue the chassis condition input signal on the basis of the strain gauge output signal.

Accordingly, the chassis condition of the chassis arrangement, which controls an operating condition of the chassis system, may be controlled on the basis of the strain gauge output signal being indicative of a strain in the leaf spring of the chassis system.

This renders a number of different control options available to the person skilled in the art.

Optionally, a change in the condition of the chassis arrangement results in a change of the strain in the leaf spring.

Optionally, a change in the condition of the chassis arrangement results in a change of the strain in the leaf spring, and the control unit is adapted to issue the chassis condition input signal to the chassis arrangement to assume a chassis condition resulting in an operating condition of the chassis system in which a strain of the leaf spring, as indicated by the strain gauge output signal, is equal to or below a predetermined maximum leaf spring strain level.

The maximum leaf spring strain level may be set so as to save the leaf spring from excessive strain, and thus to ensure satisfactory function of the leaf spring over e.g. a predetermined period of time or use cycles.

This option hence provides a possibility of avoiding wear or break of the leaf spring.

Optionally, the control unit is adapted to continuously issue the chassis condition input signal in response to a present strain gauge output signal. For example, the chassis condition of the chassis arrangement may be continuously adapted so as to ensure that the strain of the leaf spring, as indicated by the strain gauge output signal, is equal to or below a predetermined maximum leaf spring strain level.

Optionally, a change in the condition of the chassis arrangement results in a change of the strain in the leaf spring, and the control unit is adapted to determine a current vehicle operating condition having an expected duration using the strain gauge output signal, and to issue the chassis condition input signal to the chassis arrangement to assume a chassis condition resulting in an operating condition of the chassis system in which a strain of the leaf spring, as indicated by the strain gauge output signal, is expected to be equal to or below a predetermined maximum leaf spring strain level, for the duration of the current vehicle operating condition.

Optionally, a change in the condition of the chassis arrangement results in a change of the strain in the leaf spring, and the control unit is adapted to estimate a future vehicle operating condition having an expected duration using the strain gauge output signal, and to issue the chassis condition input signal to the chassis arrangement to assume a chassis condition resulting in an operating condition of the chassis system in which a strain of the leaf spring, as indicated by the strain gauge output signal, is expected to be equal to or below a predetermined maximum leaf spring strain level, for the duration of the future vehicle operating condition.

Optionally, the chassis condition of the chassis arrangement can be controlled by means of a pressurized fluid.

Optionally, the chassis arrangement is hydraulically or pneumatically controlled.

Optionally, the chassis arrangement is a suspension arrangement. For example, the chassis arrangement may comprise or be constituted by a pneumatic air spring.

Optionally, the chassis arrangement is a brake arrangement. For example, the chassis arrangement may comprise or be constituted by a pneumatic brake cylinder.

Optionally, the leaf spring and the chassis arrangement are operatively connected to the same ground contact point. For example, the chassis arrangement may operate directly or indirectly on the leaf spring.

Optionally, the control unit is arranged to control a first chassis system associated with at least one ground contact point of the vehicle and a second chassis system associated with at least one other ground contact point of the vehicle. The control unit may be adapted as set out in the above for one chassis system for each of the first and second chassis systems. Accordingly, the first chassis system comprises a leaf spring, and a chassis arrangement as described in the above. Similarly, the second chassis system comprises a leaf spring, and a chassis arrangement as described in the above.

Optionally, the one ground contact point of the first chassis system and the other ground contact point of the second chassis system are on different lateral sides of the vehicle.

Optionally, the control unit may be arranged to control a chassis system as described in the above for at least all front wheels of the vehicle.

Optionally, the control unit may be arranged to control a chassis system as described in the above for all wheels of the vehicle.

Optionally, the control unit is configured to determine a height condition of the vehicle on the basis of the strain gauge output signal, and to issue the chassis condition input signal to the chassis arrangement to assume a chassis condition resulting in an operating condition of the chassis system in which the height condition of the vehicle, as indicated by the strain gauge output signal, is within a predetermined height threshold.

For example, the strain gauge output signal may be used to determine a height condition of the vehicle, and the chassis condition of the chassis arrangement, may be used for setting a desired height. Hence, this option may be used to achieve vehicle levelling.

Optionally, the control unit is configured to determine a load condition of the vehicle on the basis of the strain gauge output signal, and to issue the chassis condition input signal to the chassis arrangement to assume a chassis condition resulting in an operating condition of the chassis system suitable for the load condition of the vehicle, as indicated by the strain gauge output signal.

Optionally the control unit is configured to determine a handling condition indicative of the occurrence of a handling event of the vehicle on the basis of the strain gauge output signal, preferably the control unit is adapted to issue the chassis condition input signal to the chassis arrangement to assume a chassis condition resulting in an operating condition of the chassis system suitable for the handling condition of the vehicle, as indicated by the strain gauge output signal.

It will be understood that for determining different conditions of the vehicle as outlined in the above, information from various auxiliary sensors may be used in combination with the strain gauge output signal.

In addition to using the strain gauge output signal to issue a chassis condition input signal to the chassis arrangement, the control unit may be adapted to determine a condition of the vehicle based on the strain gauge output signal, and to provide an output indicative of the condition to any other system.

Optionally, the control unit may be adapted to determine a height condition of the vehicle on the basis of the strain gauge output signal, and to issue a height condition output signal indicative of the height condition of the vehicle as indicated by the strain gauge output signal.

Optionally, the control unit may be adapted to determine a load condition of the vehicle on the basis of the strain gauge output signal, and to issue a load condition output signal indicative of the load condition of the vehicle as indicated by the strain gauge output signal.

Optionally, the control unit may be adapted to determine a handling condition indicative of the occurrence of a handling event of the vehicle on the basis of the strain gauge output signal, and to issue a handling condition output signal indicative of the handling condition of the vehicle as indicated by the strain gauge output signal.

In a second aspect, the invention relates to a method for controlling a chassis system between at least a ground contact point and a frame of a vehicle, the chassis system comprising a leaf spring and a chassis arrangement, the chassis arrangement being adapted to receive a chassis condition input signal and to control a chassis condition of the chassis arrangement in response to the chassis condition input signal, the method comprising receiving a strain gauge output signal indicative of a strain in the leaf spring, and issuing a chassis condition input signal to the chassis arrangement to assume a chassis condition on the basis of the strain gauge output signal.

Optionally, a change in the condition of the chassis arrangement results in a change of the strain in the leaf spring.

Optionally, a change in the condition of the chassis arrangement results in a change of the strain in the leaf spring, and the step of issuing a chassis condition input signal comprises issuing a chassis condition input signal to the chassis arrangement to assume a chassis condition resulting in an operating condition of the chassis system in which a strain of the leaf spring, as indicated by the strain gauge output signal, is equal to or below a predetermined maximum leaf spring strain level.

Optionally, said steps are carried out in an ongoing procedure at a predetermined rate. For example, the method may comprise continuously issuing the chassis condition input signal in response to a present strain gauge output signal.

Optionally, a change in the condition of the chassis arrangement results in a change of the strain in the leaf spring, and the method comprises determining a current vehicle operating condition having an expected duration using the strain gauge output signal, and the step of issuing the chassis condition input signal comprises issuing a chassis condition input signal resulting in an operating condition of the chassis system in which a strain of the leaf spring, as indicated by the strain gauge output signal, is expected to be equal to or below a predetermined maximum leaf spring strain level, for the duration of the current vehicle operating condition.

Optionally, a change in the condition of the chassis arrangement results in a change of the strain in the leaf spring, and wherein the method comprises estimating a future vehicle operating condition having an expected duration using the strain gauge output signal, and the step of issuing the chassis condition input signal comprises issuing a chassis condition input signal resulting in an operating condition of the chassis system in which a strain of the leaf spring, as indicated by the strain gauge output signal, is expected to be equal to or below a predetermined maximum leaf spring strain level, for the duration of the future vehicle operating condition.

Optionally, the chassis condition of the chassis arrangement is controlled by means of a pressurized fluid, preferably the chassis arrangement is hydraulically or pneumatically controlled.

Optionally, the chassis arrangement is a suspension arrangement, preferably the chassis arrangement is a pneumatic air spring.

Optionally, the chassis arrangement is a brake arrangement, preferably the chassis arrangement is a pneumatic brake cylinder.

Optionally, the leaf spring and the chassis arrangement are operatively connected to the same ground contact point.

Optionally, the method comprises controlling a first chassis system associated with at least one ground contact point of the vehicle and controlling a second chassis system associated with at least one other ground contact point of the vehicle, wherein preferably the one ground contact point and the other ground contact point are on different lateral sides of the vehicle.

Optionally, the method comprises independently controlling said first and second chassis system.

Optionally, the method comprises receiving a strain gauge output signal from the leaf spring of said first chassis system and a strain gauge output signal from the leaf spring of the second chassis system, and issuing a chassis condition input signal to the chassis arrangement of the first chassis system based on said strain gauge output signals from the first and second chassis systems, and issuing a chassis condition input signal to the chassis arrangement of the second system based on said strain gauge output signals from the first and second chassis systems.

Optionally, the chassis condition input signal to the chassis arrangement of the first chassis system may be the same as the chassis condition input signal to the chassis arrangement of the second chassis system.

Optionally, the chassis condition input signal to the chassis arrangement of the first chassis system may be different than the chassis condition input signal to the chassis arrangement of the second chassis system.

Optionally, the method comprises determining a height condition of the vehicle on the basis of the strain gauge output signal, and the step of issuing the chassis condition input signal to the chassis arrangement comprises issuing the chassis condition input signal to the chassis arrangement to assume a chassis condition resulting in an operating condition of the chassis system in which the height condition of the vehicle, as indicated by the strain gauge output signal, is within a predetermined height threshold.

Optionally, the method comprises determining a load condition of the vehicle on the basis of the strain gauge output signal, and the step of issuing the chassis condition input signal to the chassis arrangement comprises issuing the chassis condition input signal to the chassis arrangement to assume a chassis condition resulting in an operating condition of the chassis suitable for the load condition of the vehicle, as indicated by the strain gauge output signal.

Optionally, the method comprises determining a handling condition indicative of the occurrence of a handling event of the vehicle of the vehicle on the basis of the strain gauge output signal, and the step of issuing the chassis condition input signal to the chassis arrangement comprises issuing the chassis condition input signal to the chassis arrangement to assume a chassis condition resulting in an operating condition of the chassis system suitable for the handling condition of the vehicle, as indicated by the strain gauge output signal.

In another aspect, the invention provides a chassis system adapted for arrangement between at least a ground contact point and a frame of a vehicle comprising a leaf spring and a chassis arrangement adapted to receive a chassis condition input signal and to control a chassis condition of the chassis arrangement in response to the chassis condition input signal. The chassis system comprises a strain gauge being arranged to provide a strain gauge output signal indictive of a strain in the leaf spring, and the chassis arrangement is arranged to receive a chassis condition input signal issued on the basis of the strain gauge output signal.

Optionally, the leaf spring comprises the strain gauge, preferably the strain gauge is embedded in the leaf spring.

Optionally, the condition of the chassis arrangement can be controlled by means of a pressurized fluid, preferably the chassis arrangement is hydraulically or pneumatically controlled.

Optionally, the chassis arrangement is a suspension arrangement, preferably the chassis arrangement is a pneumatic air spring.

Optionally, the chassis arrangement is a brake arrangement, preferably the chassis arrangement is a pneumatic brake cylinder.

In another aspect, the invention provides a vehicle comprising a control unit as described in the above and/or a chassis system as described in the above.

Optionally, the vehicle comprises at least a first chassis system associated with at least one ground contact point of the vehicle and a second chassis system associated with at least one other ground contact point of the vehicle, wherein preferably the one ground contact point and the other ground contact point are on different lateral sides of the vehicle.

Optionally, the first and second chassis systems are arranged to be independently controlled.

Features and corresponding advantages as described in relation to one of the aspects of the invention are equally applicable to other aspects of the invention (e.g. features described in relation to the control unit are equally applicable to the method and vice versa), and all combinations thereof are to be included in this disclosure.

### BRIEF DESCRIPTION OF THE DRAWINGS

With reference to the appended drawings, below follows a more detailed description of embodiments of the invention cited as examples.

In the drawings:
Fig. 1 is a schematic drawing of a vehicle in which a chassis system may be implemented;
Fig. 2 illustrates an embodiment of a chassis system;
Fig. 3 illustrates schematically an embodiment of a control unit;
Fig. 4 illustrates schematically an embodiment of a method.

### DETAILED DESCRIPTION

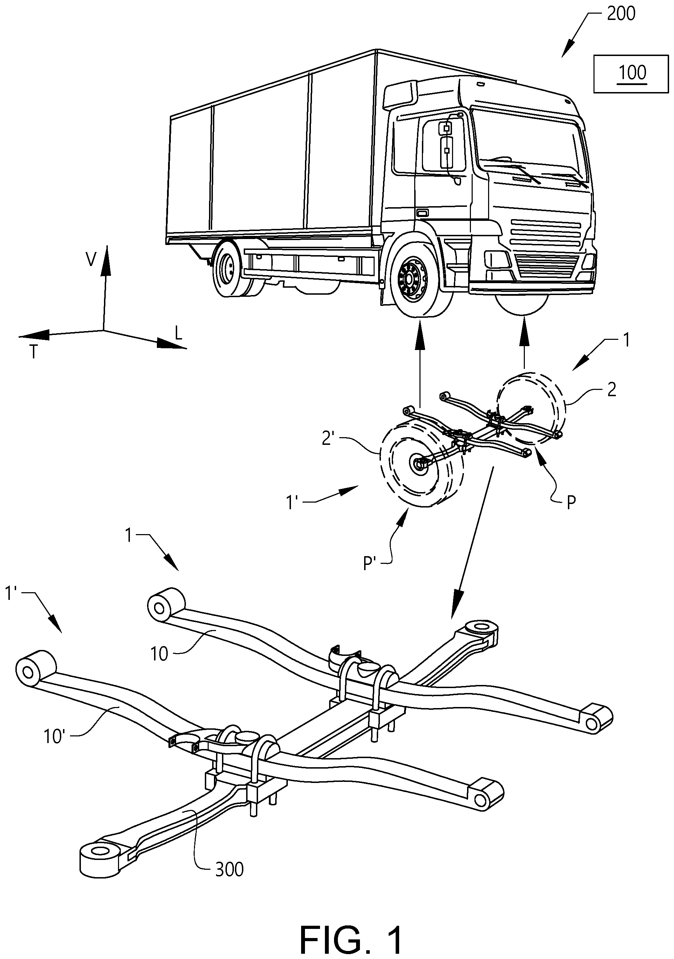

The invention will be described below for a vehicle in the form of a truck 200 such as the truck illustrated in Fig. 1. The truck 200 should be seen as an example of a vehicle for which the method of the present invention could be carried out, or which could comprise the control unit and/or chassis assembly in accordance with the present invention.

However, the method, control unit or chassis assembly may be implemented in a plurality of different types of vehicles, such as a truck, a tractor, a car, a bus, a work machine such as a wheel loader or any other type of construction equipment.

The vehicle 200 comprises a vehicle body with a longitudinal axis extending in a longitudinal direction L, a transversal axis T extending in a transversal direction, and a vertical axis V extending in a vertical direction. The longitudinal axis L, the transversal axis T and the vertical axis V are perpendicular to each other. Moreover, as indicated in Fig. 1, the longitudinal direction L corresponds to an intended direction of travel of the vehicle and the vertical direction V is parallel to a vertical line when the vehicle is positioned on a flat horizontally extending surface.

Purely by way of example, Fig. 1 schematically illustrates the truck 200 comprising two chassis systems 1, 1', each chassis system 1, l' comprising a leaf spring 10, 10'. Each of the chassis systems 1, 1' are arranged between a respective ground contact point P, P' and frame (not shown) of the vehicle 200.

In the illustrated exemplary embodiment, the leaf springs 10, 10' are arranged on a vehicle axle 300. The leaf springs 10, 10' are fixed to the vehicle frame with fixing members such as e.g. bolts at distal end portions of the leaf springs 10, 10'.

In the example illustrated in Fig. 1, each chassis system 1, 1' is associated with a wheel 2, 2' constituting the ground contact points P, P' located on each lateral side of the vehicle 200. In Fig. 1, the wheels 2, 2' are the front wheels of the vehicle 200. In the illustrated example, the wheels 2, 2' are arranged to the vehicle axle 300.

It will be understood that the present description is equally applicable to chassis systems associated with other wheels or ground contact points of the vehicle, or in particular to a single chassis system.

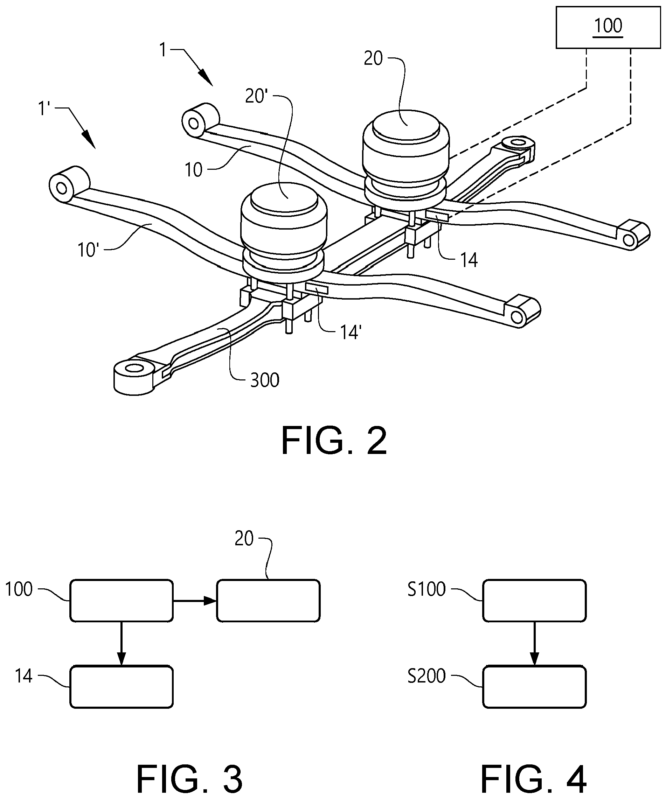

Fig. 2 illustrates an example embodiment of the invention, as applied in a first and a second chassis system 1, 1' as illustrated in Fig. 1. The description will be made with reference to the first chassis system 1. It will be understood that the description may optionally be applied also to the second chassis system 1'.

As schematically illustrated in Fig. 2, the chassis system comprises a strain gauge 14 adapted to issue a strain gauge output signal indicative of a strain in the leaf spring 10. As indicated in Fig. 2, the strain gauge 14 may be embedded in the leaf spring 10. The leaf spring 10 may be composite leaf spring with at least one embedded strain gauge 14. Alternatively, the strain gauge 14 may be arranged at or adjacent the leaf spring 10 in a manner so as to be able to issue the strain gauge output signal.

One or more strain gauge elements may be provided to form the strain gauge 14 of the leaf spring 10.

A control unit 100 is adapted to receive the strain gauge output signal from the strain gauge 14, as indicated by the dashed line in Fig. 2. The control unit 100 is preferably an electronic control unit. The control unit may be arranged in the vehicle 200 or remote from the vehicle 200.

In addition, the control unit 100 may be adapted to receive information from one or more auxiliary sensors. Purely by way of example, the one or more auxiliary sensors may include at least one of a vehicle sensor, a ground condition sensor (e.g. an inclinometer) and/or means for determining the current position of the vehicle 100.

Furthermore, the chassis system 1 comprises a chassis arrangement 20. The control unit 100 is adapted to issue a chassis condition input signal to the chassis arrangement 20, as indicated by the dashed line in Fig. 2, upon which the chassis arrangement 20 assumes a chassis condition.

The control unit 100 may be in communication with the strain gauge 14, and/or the chassis arrangement 20 and/or any additional one or more auxiliary sensors through wireless and/or wire based communication means.

The control of the chassis condition of the chassis arrangement 20 based on the strain gauge output signal from the leaf spring strain gauge 14 of the leaf spring 10 provides for numerous control possibilities of the chassis arrangement 20.

For example, the chassis condition of the chassis arrangement 20 can be controlled by means of a pressurized fluid. Purely by way of example, the chassis arrangement 20 may be hydraulically or pneumatically controlled. In this case, the chassis condition input signal comprises a hydraulic or pneumatic input control signal.

In the Fig. 2 embodiment, the chassis arrangement 20 is a suspension arrangement. Furthermore, in the illustrated embodiment the chassis arrangement 20 is implemented by a pneumatic air spring. As such, the chassis condition of the chassis arrangement 20 which is controlled by the chassis condition input signal is, or is at least indicative of, the pneumatic pressure in the air spring.

However, it is conceivable to implement the chassis arrangement 20 as another type of suspension arrangement such as a damper or stopper arrangement.

Purely by way of example, the leaf spring 10 and the chassis arrangement 20 may be operatively connected to the same ground contact point P. From Figs 1 and 2, it may be gleaned that the leaf spring 10 and the chassis arrangement 20 are operatively connected to the same ground contact point P via the wheel 2 on one lateral side of the vehicle 200. By way of example, and as in the illustrated embodiment, the chassis arrangement 20 may operate directly or indirectly on the leaf spring 10. The chassis arrangement 20 may for example be arranged between the leaf spring 10 and the frame of the vehicle 200.

In another, non-illustrated example, the chassis arrangement 20 may be a brake arrangement. For example, the chassis arrangement 20 may be a pneumatic brake cylinder. For example, in principle the strain gauge output signal indicative of a strain in the leaf spring 10 may be used to determine a present effective braking force and the brake pressure corresponding to the chassis condition of the pneumatic brake cylinder may be adjusted accordingly. As such, though purely by way of example, the braking of the vehicle may be based on a detected strain in the leaf spring 10.

In a non-limiting example, the chassis arrangement 20 and leaf spring 10 may be arranged such that a change in the condition of the chassis arrangement 20 results in a change of the strain in the leaf spring 10, and the control unit 100 is adapted to issue the chassis condition input signal to the chassis arrangement 20 to assume a chassis condition resulting in an operating condition of the chassis system 1 in which a strain of the leaf spring 10, as indicated by the strain gauge output signal, is equal to or below a predetermined maximum leaf spring strain level.

Hence, using the above procedure, the maximum leaf spring strain level may be set so as to save the leaf spring 10 from excessive strain, and thus to ensure satisfactory function of the leaf spring 10 over e.g. a predetermined period of time or use cycles. This option hence provides a possibility of avoiding wear or breakage of the leaf spring 10.

As a non-limiting example, the control unit 100 is adapted to continuously issue the chassis condition input signal in response to a present strain gauge output signal. For example, the chassis condition of the chassis arrangement 20 may be continuously adapted so as to ensure that the strain of the leaf spring 10, as indicated by the strain gauge output signal, is equal to or below a predetermined maximum leaf spring strain level. As such, the chassis condition of the chassis arrangement 20 may be continuously adapted depending on the output from the strain gauge 14 of the leaf spring 10. For example, using the above procedure, if the strain gauge output signal varies when the vehicle 200 travels over an uneven road, the chassis condition of the chassis arrangement 20 may be continuously adapted so as to save the leaf spring 14 from excessive strain when travelling over the road.

As another non-limiting example, a change in the condition of the chassis arrangement 20 results in a change of the strain in the leaf spring 10, and the control unit 100 is adapted to determine a vehicle operating condition having an expected duration using the strain gauge output signal, and to issue the chassis condition input signal to the chassis arrangement 20 to assume a chassis condition resulting in an operating condition of the chassis system 1 in which a strain of the leaf spring 10, as indicated by the strain gauge output signal, is expected to be equal to or below a predetermined maximum leaf spring strain level, for the duration of the current vehicle operating condition. As such, a current vehicle operating condition may be determined using the strain gauge output signal, and a suitable chassis condition may be set for an expected duration of the vehicle operating condition. For example, using the above procedure, if the strain gauge output signal indicates that the vehicle 200 travels over an uneven road, the duration of travel over this uneven road may be estimated, and the chassis condition of the chassis arrangement 20 may be set to a level which is estimated to be sufficient to save the leaf spring 14 from excessive strain during the duration of travel over the uneven road.

In another non-limiting example, a change in the condition of the chassis arrangement 20 results in a change of the strain in the leaf spring 10, and the control unit is adapted to estimate a future vehicle operating condition having an expected duration using the strain gauge output signal, and to issue the chassis condition input signal to the chassis arrangement 20 to assume a chassis condition resulting in an operating condition of the chassis system 1 in which a strain of the leaf spring 10, as indicated by the strain gauge output signal, is expected to be equal to or below a predetermined maximum leaf spring strain level, for the duration of the future vehicle operating condition. As such, a future vehicle operating condition may be estimated using the strain gauge output signal, and a suitable chassis condition may be set for an expected future duration of the vehicle operating condition. For example, using the above procedure, if the strain gauge output signal indicates that, if in the future the vehicle 200 travels over an uneven road the leaf spring 14 risks suffering from excessive strain, a future occurrence of travel over such an uneven road and its duration may be estimated, and the chassis condition of the chassis arrangement 20 may be set to a level which is estimated to be sufficient to save the leaf spring 14 from excessive strain during the future duration of travel over the uneven road.

In a non-limiting example, the control unit 100 is configured to determine a height condition of the vehicle 200 on the basis of the strain gauge output signal, and to issue the chassis condition input signal to the chassis arrangement 20 to assume a chassis condition resulting in an operating condition of the chassis system 1 in which the height condition of the vehicle 200, as indicated by the strain gauge output signal, is within a predetermined height threshold.

For example, the strain gauge output signal may be used to determine a height condition of the vehicle 200, and the chassis condition of the chassis arrangement 20 may be used for setting a desired height. Hence, this option may be used to achieve vehicle levelling.

In a non-limiting example, the control unit 100 is configured to determine a load condition of the vehicle 200 on the basis of the strain gauge output signal, and to issue the chassis condition input signal to the chassis arrangement 20 to assume a chassis condition resulting in an operating condition of the chassis system 1 suitable for the load condition of the vehicle, as indicated by the strain gauge output signal.

An operating condition of the chassis system suitable for the load condition of the vehicle 200 may for example be an operating condition diminishing the impact of uneven loading.

In another example, an increased load on the suspension system may motivate an adjustment of the vehicle height. If the control system determines that the load of the vehicle has increased on the basis of the received strain gauge output signal, a suitable operating condition for the chassis system to the load condition may be an operating condition in which the height of the vehicle is increased. To this end, the control unit may set a predetermined height threshold suitable for the indicated load condition.

To distinguish whether an alteration in the strain gauge output signal corresponds e.g. to an actual load difference or an actual height difference, the control unit may utilize additional input signals, such as for example a signal indicating whether the vehicle is presently loaded/unloaded or not, a signal indicating the speed of the vehicle, etc . As already mentioned in the above, the control unit may be connected to one or more auxiliary sensors to this end.

In a non-limiting example, the control unit 100 is configured to determine a handling condition indicative of the occurrence of a handling event of the vehicle 200 on the basis of the strain gauge output signal, preferably the control unit 100 is adapted to issue the chassis condition input signal to the chassis arrangement 20 to assume a chassis condition resulting in an operating condition of the chassis system 1 suitable for the handling condition of the vehicle 200, as indicated by the strain gauge output signal.

A handling condition describes generally the way the vehicle responds and reacts to the input of a driver as well as how it moves over e.g. a road. Handling events may for example including braking events, cornering events, and acceleration events, as well as e.g. an uphill driving event or an uneven road event.

Purely by way of example, the handling condition may be a condition causing a redistribution of vehicle load over the frame and the operating condition suitable for the handling condition may be an operating condition counteracting the redistribution of load over the frame. For example, if the handling condition is a brake event causing the load to be redistributed towards the front of the vehicle, a suitable operating condition may be an operating condition in which the front of the vehicle is raised in relation to the back of the vehicle.

It will be understood that for determining different conditions of the vehicle as outlined in the above, information from various auxiliary sensors may be used in combination with the strain gauge output signal.

Purely by way of example, in addition to using the strain gauge output signal to issue a chassis condition control signal to the second chassis system, the control unit may be adapted to determine a condition of the vehicle based on the strain gauge output signal, and to provide an output indicative of the condition to any other system.

For example, the control unit 100 may be adapted to determine a height condition of the vehicle on the basis of the strain gauge output signal, and to issue a height condition output signal indicative of the height condition of the vehicle as indicated by the strain gauge output signal. Such a height condition output signal could be used e.g. as input to a system for displaying information of the height of the vehicle 200.

For example, the control unit 100 may be adapted to determine a load condition of the vehicle 200 on the basis of the strain gauge output signal, and to issue a load condition output signal indicative of the load condition of the vehicle 200 as indicated by the strain gauge output signal. Such a load condition output signal could be used e.g. as input to a system for displaying information of the load condition of a vehicle 200, and/or to a system for issuing a warning if the vehicle is overloaded.

For example, the control unit 100 may be adapted to determine a handling condition indicative of the occurrence of a handling event of the vehicle on the basis of the strain gauge output signal, and to issue a handling condition output signal indicative of the handling condition of the vehicle as indicated by the strain gauge output signal. For example, such a handling condition could be used as input to a system for automatic manoeuvring of the vehicle, or to a system for fleet management of several vehicles.

Purely by way of example, and as illustrated in Figs 1-2, the control unit 100 may be arranged to control a plurality of chassis systems 1, 1'. Purely by way of example, and as illustrated in Figs 1-2, the control unit 100 may be arranged to control a first chassis system 1 associated with at least one ground contact point P of the vehicle 200 and a second chassis system 1' associated with at least one other ground contact point P' of the vehicle 200. As described in the above, the first chassis system 1 comprises a leaf spring 10 with a leaf spring strain sensor 14, and a chassis arrangement 20 as described in the above. Similarly, the second chassis system 1' comprises a leaf spring 10' with a leaf spring strain sensor 14', and a chassis arrangement 20' as described in the above. In the illustrated example, the ground contact points P, P' are implemented by the contact of the wheels 2, 2' to the ground.

As a non-limiting example, the one ground contact point P of the first chassis system and the other ground contact point P' of the second chassis system are on different lateral sides of the vehicle 200.

By way of example, and as illustrated in Figs 1-2, the control unit 100 may be arranged to control a chassis system 1, 1' as described in the above for each one of the front ground contact points P, P' of the vehicle. In another option, the control unit 100 may be arranged to control a chassis system as described in the above for all ground contact points P, P' of the vehicle.

Fig. 3 is a schematic flow chart showing a control unit 100, connected to a leaf spring strain gauge 14 and a chassis arrangement 20. As outlined in the above, the control unit 100 may communicate with the leaf spring strain gauge(s) 14 and the chassis arrangement 20 via wired or wireless connections.

Fig. 4 is a flow chart of method steps according to embodiments of the invention. The method steps are for controlling a chassis system 1 between at least a ground contact point P and a frame of a vehicle 200, wherein the chassis system 1 comprises a leaf spring 10 and a chassis arrangement 20, the chassis arrangement 20 being adapted to receive a chassis condition input signal and to control a chassis condition of the chassis arrangement 20 in response to the chassis condition input signal. In a first step S100, the method comprises receiving a strain gauge output signal indicative of a strain in the leaf spring 10, and in a second step S200, the method comprises issuing a chassis condition input signal to the chassis arrangement 20 to assume a chassis condition on the basis of the strain gauge output signal.

In addition to the above, the second step S200 of the method may, where a change in the condition of the chassis arrangement 20 results in a change of the strain in the leaf spring 10, comprise issuing a chassis condition input signal to the chassis arrangement 20 to assume a chassis condition resulting in an operating condition of the chassis system 1 in which a strain of the leaf spring 10, as indicated by the strain gauge output signal, is equal to or below a predetermined maximum leaf spring strain level S200.

Further modifications and alternatives of the method will be apparent from the above description of the chassis system 1, vehicle 200 and control unit 100.

Even though the invention has been described with reference to specific exemplifying embodiments thereof, many different alterations, modifications and the like will become apparent for those skilled in the art. Accordingly, it is to be understood that the present invention is not limited to the embodiments described above and illustrated in the drawings, rather the skilled person will recognize that many changes and modifications may be made within the scope of the appended claims.

## Claims

1. A control unit (100) for controlling a chassis system (1) between at least a ground contact point (P) and a frame of a vehicle (200), the chassis system (1) comprising a leaf spring (10) and a chassis arrangement (20),
said chassis arrangement (20) is adapted to receive a chassis condition input signal and to control a chassis condition of said chassis arrangement (20) in response to said chassis condition input signal,
said chassis system (1) further comprising a strain gauge (14) adapted to issue a strain gauge output signal indicative of a strain in said leaf spring (10), wherein
said control unit (100) is adapted to receive said strain gauge output signal and to issue said chassis condition input signal to said chassis arrangement (20) on the basis of said strain gauge output signal.

2. A control unit according to claim 1, wherein a change in the condition of said chassis arrangement (20) results in a change of the strain in said leaf spring (10), wherein said control unit (100) is adapted to issue said chassis condition input signal to said chassis arrangement (20) to assume a chassis condition resulting in an operating condition of said chassis system (1) in which a strain of said leaf spring (10), as indicated by said strain gauge output signal, is equal to or below a predetermined maximum leaf spring strain level.

3. A control unit according to claim 1 or 2, wherein said control unit (100) is adapted to continuously issue said chassis condition input signal in response to a present strain gauge output signal.

4. A control unit according to claim 1, wherein a change in the condition of said chassis arrangement (20) results in a change of the strain in said leaf spring (10), wherein said control unit (100) is adapted to determine a current vehicle operating condition having an expected duration using said strain gauge output signal, and to issue said chassis condition input signal to said chassis arrangement (20) to assume a chassis condition resulting in an operating condition of said chassis system (1) in which a strain of said leaf spring (10), as indicated by said strain gauge output signal, is expected to be equal to or below a predetermined maximum leaf spring strain level, for the duration of said current vehicle operating condition.

5. A control unit according to claim 1, wherein a change in the condition of said chassis arrangement (20) results in a change of the strain in said leaf spring (10), wherein said control unit (100) is adapted to estimate a future vehicle operating condition having an expected duration using said strain gauge output signal, and to issue said chassis condition input signal to said chassis arrangement (20) to assume a chassis condition resulting in an operating condition of said chassis system (1) in which a strain of said leaf spring (10), as indicated by said strain gauge output signal, is expected to be equal to or below a predetermined maximum leaf spring strain level, for the duration of said future vehicle operating condition.

6. A control unit according to any one of the previous claims, wherein said chassis condition of said chassis arrangement (20) can be controlled by means of a pressurized fluid, preferably said chassis arrangement (20) is hydraulically or pneumatically controlled.

7. A control unit according to any one of the previous claims, wherein said chassis arrangement (20) is a suspension arrangement, preferably said chassis arrangement (20) is a pneumatic air spring.

8. A control unit according to any one of the previous claims, wherein said chassis arrangement (20) is a brake arrangement, preferably said chassis arrangement (20) is a pneumatic brake cylinder.

9. A control unit according to any one of the previous claims, wherein said control unit (100) is arranged to control a first chassis system (1) associated with at least one ground contact point (P) of the vehicle (200) and a second chassis system (1') associated with at least one other ground contact point (P') of the vehicle, wherein preferably said one ground contact point (P) and said other ground contact point (P') are on different lateral sides of the vehicle (200).

10. A control unit according to any one of the preceding claims, wherein said control unit (100) is configured to determine a height condition of said vehicle (200) on the basis of said strain gauge output signal, and to issue said chassis condition input signal to said chassis arrangement (20) to assume a chassis condition resulting in an operating condition of said chassis system (1) in which said height condition of said vehicle (200), as indicated by said strain gauge output signal, is within a predetermined height threshold.

11. A control unit according to any one of the previous claims, wherein said control unit (100) is configured to determine a load condition of said vehicle (200) on the basis of said strain gauge output signal, and to issue said chassis condition input signal to said chassis arrangement (20) to assume a chassis condition resulting in an operating condition of said chassis system (1) suitable for said load condition of said vehicle (200), as indicated by said strain gauge output signal.

12. A control unit according to any one of the previous claims, wherein said control unit (100) is configured to determine a handling condition indicative of the occurrence of a handling event of said vehicle (200) on the basis of said strain gauge output signal, preferably said control unit (100) is adapted to issue said chassis condition input signal to said chassis arrangement (20) to assume a chassis condition resulting in an operating condition of said chassis system (1) suitable for said handling condition of said vehicle (200), as indicated by the strain gauge output signal.

13. A method for controlling a chassis system (1) between at least a ground contact point (P) and a frame of a vehicle (200), the chassis system (1) comprising a leaf spring (10) and a chassis arrangement (20), the chassis arrangement (20) being adapted to receive a chassis condition input signal and to control a chassis condition of said chassis arrangement (20) in response to said chassis condition input signal, said method comprising:
receiving a strain gauge output signal indicative of a strain in said leaf spring (10) (S100),
issuing a chassis condition input signal to said chassis arrangement (20) to assume a chassis condition on the basis of said strain gauge output signal (S200).

14. A method according to claim 13, wherein a change in the condition of said chassis arrangement (20) results in a change of the strain in said leaf spring (10), and wherein said step of issuing a chassis condition input signal comprises issuing a chassis condition input signal to said chassis arrangement (20) to assume a chassis condition resulting in an operating condition of said chassis system (1) in which a strain of said leaf spring (10), as indicated by said strain gauge output signal, is equal to or below a predetermined maximum leaf spring strain level (S200).

15. A method according to claim 13 or 14, wherein said steps are carried out in an ongoing procedure at a predetermined rate.

16. A method according to claim 13, wherein a change in the condition of said chassis arrangement (20) results in a change of the strain in said leaf spring (10), and wherein said method comprises determining a current vehicle operating condition having an expected duration using said strain gauge output signal, and said step of issuing said chassis condition input signal (S200) comprises
issuing a chassis condition input signal resulting in an operating condition of said chassis system in which a strain of said leaf spring (10), as indicated by said strain gauge output signal, is expected to be equal to or below a predetermined maximum leaf spring strain level, for the duration of said current vehicle operating condition.

17. A method according to claim 13, wherein a change in the condition of said chassis arrangement (20) results in a change of the strain in said leaf spring (10), and wherein said method comprises estimating a future vehicle operating condition having an expected duration using said strain gauge output signal, and said step of issuing said chassis condition input signal (S200) comprises
issuing a chassis condition input signal resulting in an operating condition of said chassis system in which a strain of said leaf spring (10), as indicated by said strain gauge output signal, is expected to be equal to or below a predetermined maximum leaf spring strain level, for the duration of said future vehicle operating condition.

18. Method according to any one of the claims 13 to 17, wherein said chassis condition of said chassis arrangement (20) is controlled by means of a pressurized fluid, preferably the chassis arrangement (20) is hydraulically or pneumatically controlled.

19. A method according to any one of the claims 13 to 18, wherein said chassis arrangement (20) is a suspension arrangement, preferably said chassis arrangement (20) is a pneumatic air spring, or wherein said chassis arrangement (20) is a brake arrangement, preferably said chassis arrangement (20) is a pneumatic brake cylinder.

20. A method according to any one of the claims 13 to 19, comprising controlling a first chassis system (1) associated with at least one ground contact point (P) of the vehicle (200) and controlling a second chassis system (1') associated with at least one other ground contact point (P') of the vehicle, wherein preferably said one ground contact point (P) and said other ground contact point (P') are on different lateral sides of the vehicle (200).

21. A method according to any one of the claims 13 to 20, the method comprising determining a height condition of said vehicle (200) on the basis of said strain gauge output signal, said step (S200) of issuing said chassis condition input signal to said chassis arrangement (20) comprises issuing said chassis condition input signal to said chassis arrangement (20) to assume a chassis condition resulting in an operating condition of said chassis system (1) in which said height condition of said vehicle (200), as indicated by said strain gauge output signal, is within a predetermined height threshold.

22. A method according to any one of the claims 13 to 21, the method comprising determining a load condition of said vehicle (200) on the basis of said strain gauge output signal, said step (S200) of issuing said chassis condition input signal to said chassis arrangement (20) comprises issuing said chassis condition input signal to said chassis arrangement (20) to assume a chassis condition resulting in an operating condition of said chassis (1) suitable for said load condition of said vehicle (200), as indicated by said strain gauge output signal.

23. A method according to any one of the claims 13 to 22, the method comprising determining a handling condition indicative of the occurrence of a handling event of said vehicle (200) on the basis of said strain gauge output signal, and said step of issuing said chassis condition input signal to said chassis arrangement (S200) comprises issuing said chassis condition input signal to said chassis arrangement (20) to assume a chassis condition resulting in an operating condition of said chassis system (1) suitable for said handling condition of said vehicle (200), as indicated by the strain gauge output signal.

24. A chassis system (1) adapted for arrangement between at least a ground contact point (P) and a frame of a vehicle (200) comprising
a leaf spring (10) and
a chassis arrangement (20) adapted to receive a chassis condition input signal and to control a chassis condition of said chassis arrangement (20) in response to said chassis condition input signal,
**characterized by**
said chassis system (1) comprising a strain gauge (14) being arranged to provide a strain gauge output signal indictive of a strain in said leaf spring (10), and
the chassis arrangement (20) being arranged to receive a chassis condition input signal issued on the basis of said strain gauge output signal.

25. Vehicle comprising a control unit according to any one of the claims 1 to 12 and/or a chassis system according to claim 24.
